# EUROPEAN PATENT APPLICATION

(11) **EP 2 354 911 A1**
(43) Date of publication of application: **10.08.2011**
(21) Application number: 10161768.6
(22) Date of filing: 03.05.2010
(51) Int. Cl.: G06F 3/048

(54) **Multi-screens electronic apparatus and image display method thereof**

(30) Priority: 31.12.2009 TW 098146330
(71) Applicant: Acer Incorporated, Taipei County (TW)
(72) Inventor: Tsai, Chuan-Ming, Taipei Hsien 221 (TW); Chuang, Tzu-Lung, Taipei Hsien 221 (TW); Ko, Chueh-Pin, Taipei Hsien 221 (TW)
(74) Representative: advotec.

(57) **Abstract**

The present invention relates to a multi-screens electronic apparatus and image display method thereof. The method is applicable to an electronic apparatus with a display unit and a touch-sensitive display unit, comprising the following steps: reading a digital file via a processing module and display the content of the digital file on the display unit; choosing a specific region by using a region choosing module; displaying the content of the specific region on the touch-sensitive display unit by the processing module; when a touch control command is received by the touch display, adjusting the range of content on the touch-sensitive display; and adjusting the range of the specific region in the display unit according to the adjusted range of the content displayed on the touch-sensitive display unit.

## Description

### FIELD OF THE INVENTION

The present invention relates to an electronic apparatus and an image display method thereof, and more particularly to a multi-screens electronic apparatus in a multi-screen operation and an image display method thereof.

### BACKGROUND OF THE INVENTION

With the increasing environmental consciousness worldwide, paperless reading has become a development key point of many research institutions. An e-book refers to a solution that utilizes an electronic and digital method instead of a traditional paper book. This electronicalizes traditional paper reading, that is, the digitalized content of a book is read on a portable e-reader similar to a book. The content is in a digitalized text format or includes text files in other formats. In order to give consideration to both electricity saving and paper reading experience, screens equipped in portable e-readers are mostly cholesteric liquid crystal screens, e-paper screens, or e-ink screens. For example, an e-paper screen is different from common fiber paper and is made of an electrically conductive polymeric material that contains many microspheres (micro capsules) and has the same appearance and characteristics as common paper. It is flexible and can display data repeatedly.

In e-paper technology, the size of the microspheres represents the size of pixels of the display. The microspheres are driven by an external voltage to change their state. After the state has been changed, the e-paper can remain in the changed state. Therefore, it has an electricity-saving advantage. However, the frame Per second (FPS) of an e-paper is very low, about 0.5 to 2 times per second. As a result, when the user desires to drag a window on the e-paper screen rapidly to choose the content to be read like on a common liquid crystal screen or the user desires to enlarge or reduce a window to obtain appropriate sizes of characters, letters or patterns because the current resolution is unwanted or even when the user desires to write annotations or comments in a handwriting manner, it is possible for the e-paper screen to generate residual images or other unexpected effects due to the low FPS, which brings a lot of inconvenience to common users.

### SUMMARY OF THE INVENTION

In view of the above-mentioned problems of the prior art, an obj ect of the present invention is to provide a multi-screens electronic apparatus and an image display method thereof, which solve the delay problems of the contents displayed on a display.

Another object of the present invention is to provide a multi-screens electronic apparatus and an image display method thereof, whereby the user can write annotations directly when reading a digital file. When the digital file is opened again next time, the content of the digital file and the written annotations can be displayed.

According to an object of the present invention, there is provided an image display method applicable to an electronic apparatus with a display unit and a touch-sensitive display unit, the image display method comprising reading a digital file via a processing module and displaying the content of the digital file on the display unit. The content of a specific region in the display unit is displayed on the touch-sensitive display unit via the processing module. The processing module then adjusts the range of the content displayed on the touch-sensitive display unit according to a touch control command inputted to the touch-sensitive display unit. Finally, the range of the specific region in the display unit is adjusted according to the adjusted range of the content displayed on the touch-sensitive display unit via the processing module.

The image display method further comprises inputting a touch annotation to the touch-sensitive display unit so that the processing module generates a first annotated drawing file according to the touch annotation. The processing module then transparently superimposes the first annotated drawing file over the specific region and the touch-sensitive display unit according to the touch annotation and a first relative position of the content displayed on the touch-sensitive display unit. Finally, the processing module generates a second annotated drawing file according to parts of the first annotated drawing file that have the touch annotations and stores the second annotated drawing file and a second relative position of the third annotated drawing file and the content displayed on the display unit in a storage unit

Moreover, the present invention provides a multi-screens electronic apparatus comprising a display unit, a touch-sensitive display unit, a storage unit, a region choosing module and a processing module. The storage unit can store a digital file. The processing module is electrically connected to the display unit, the touch-sensitive display unit, the region choosing module and the storage unit for reading the digital file to display the content of the digital file on the display unit. The processing module can drive the region choosing module to choose a specific region from the display unit, so that the processing module displays the content of the specific region on the touch-sensitive display unit.

When a touch control command is received by the touch-sensitive display unit, so that the processing module adjusts the range of content displayed on the touch-sensitive display unit, the processing module adjusts the range of the specific region according to the adjusted range of the content displayed on the touch-sensitive display unit.

As described above, the multi-screens electronic apparatus and the image display method thereof according to the present invention may have one or more of the following advantages:
(1) According to the multi-screens electronic apparatus and the image display method thereof, a specific region can be chosen from the display unit and the content of the specific region is then displayed on the touch-sensitive display unit. Thus, operations such as dragging or enlarging/reducing can be performed on a touch-sensitive display unit to overcome the image delay problem that a display unit cannot provide enough FPS corresponding to various operations.
(2) According to the multi-screens electronic apparatus and the image display method thereof, touch annotations can be inputted to a touch-sensitive display unit to generate an annotated drawing file that is transparently superimposed over the content, in which the user can write annotations for increased convenience in use.

### BRIEF DESCRIPTION OF THE DRAWINGS

FIG. 1 is a block diagram of a preferred embodiment of a multi-screens electronic apparatus according to the present invention;
FIG. 2 is a schematic front view of the multi-screens electronic apparatus of FIG. 1;
FIG. 3A is a schematic view illustrating dragging the content displayed on the touch-sensitive display unit of the multi-screens electronic apparatus of FIG. 2;
FIG. 3B is a schematic view illustrating enlarging the content displayed on the touch-sensitive display unit of the multi-screens electronic apparatus of FIG. 2;
FIG. 3C is a schematic view illustrating reducing the content displayed on the touch-sensitive display unit of the multi-screens electronic apparatus of FIG. 2;
FIG. 3D is a schematic view illustrating writing an annotation on the touch-sensitive display unit of the multi-screens electronic apparatus of FIG. 2 with a hand;
FIG. 4 is a flow chart illustrating the implementation of an image display method according to the present invention; and
FIG. 5 is a flow chart illustrating the implementation of an image display method for displaying a handwritten annotation according to the present invention.

### DETAILED DESCRIPTION OF THE PREFERRED EMBODIMENTS

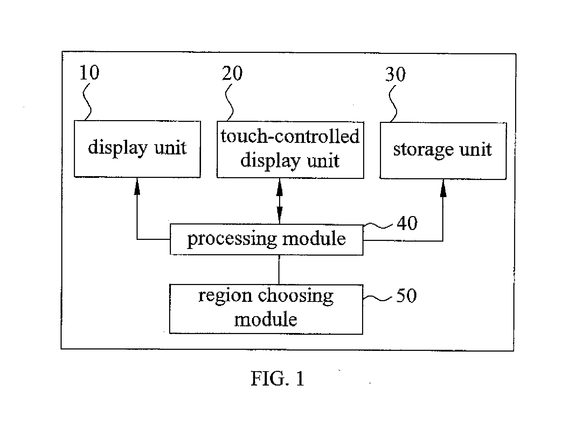

Referring to FIG. 1, there is illustrated a block diagram of a preferred embodiment of a multi-screens electronic apparatus according to the present invention. In this figure, the multi-screens electronic apparatus comprises a display unit 10, a touch-sensitive display unit 20, a storage unit 30, a processing module 40 and a region choosing module 50.

Preferably, the display unit 10 is a cholesteric liquid crystal screen, an e-paper screen, an e-ink screen, or the like, which is suitable for the user to read the contents of an e-book as well as is electricity-saving. Preferably, the touch-sensitive display unit 20 is a touch screen with a high frame per second rate, such as an optical touch screen, a resistive touch screen, a capacitive touch screen, or the like. The frame per second of the display unit 10 is less than the frame per second of the touch-sensitive display unit 20. The frame per second of the display unit 10 is less than about 5 FPS. The frame per second of the touch-sensitive display unit 20 is between about 5 FPS and 30 FPS. However, the resolution of the display unit 10 may be higher than the resolution of the touch-sensitive display unit 20.

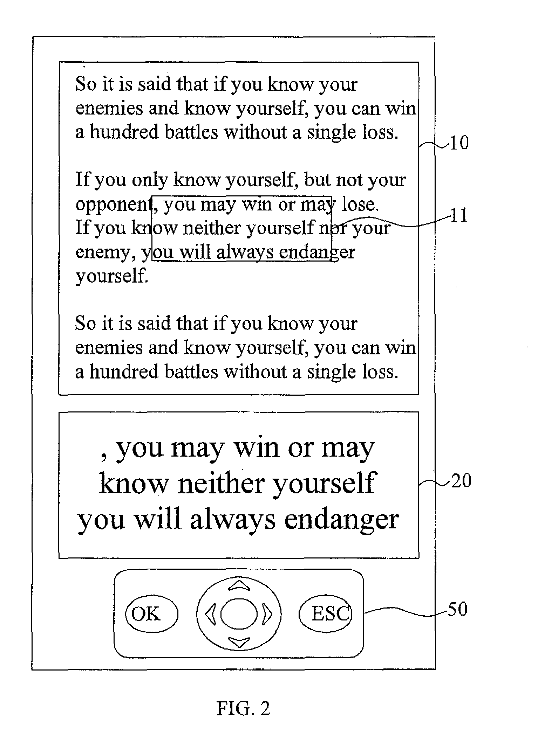

Preferably, the storage unit 30 is a hard disk, a solid state disk, a compact disc or other suitable storage media, which is used for storing digital files. When the user clicks on a digital file, the processing module 40 opens the digital file and displays the content of the digital file on the display unit 10 for the user to read. The user can choose a specific region 11 from the display unit 10 by using the region choosing module 50 such that the processing module 40 displays the content of the digital file in the specific region 11 on the touch-sensitive display unit 20, as illustrated in FIG. 2. In implementation, the region choosing module 50 may be comprised of four direction keys including up, down, left and right direction keys, an OK key and a cancel key.

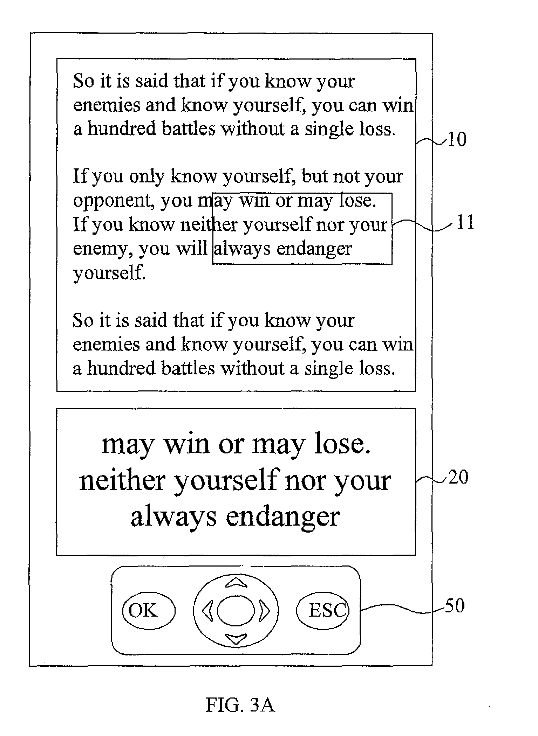

When the user inputs a touch control command to the touch-sensitive display unit 20 such that the processing module 40 changes the range of the content displayed on the touch-sensitive display unit 20, the processing module 40 adjusts the range of the chosen specific region 11 on the display unit 10 to enable the content displayed in the chosen specific region to be the same as the content displayed on the touch-sensitive display unit 20. Namely, when the user drags the content displayed on the touch-sensitive display unit 20 in a touch manner to change the range of the content displayed on the touch-sensitive display unit 20, the processing module 40 can enable the displacement of the chosen specific region 11 on the display unit 10 according to the touch control command so that the content displayed in the displaced specific region 11 is the same as the content displayed on the touch-sensitive display unit 20 after dragging, as illustrated in FIG. 3A. In FIG. 3A, the user drags the displayed content rightwards on the touch-sensitive display unit 20, and the specific region 11 on the display unit 10 is displaced rightwards accordingly so that the content displayed in the displaced specific region 11 is the same as the content displayed on the touch-sensitive display unit 20.

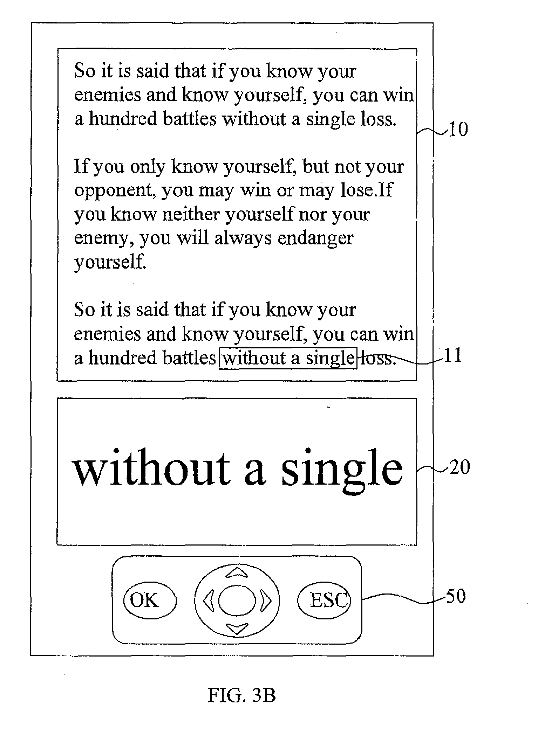

When the user feels that characters, letters or patterns in the content displayed on the touch-sensitive display unit 20 are too small, the content displayed on the touch-sensitive display unit 20 can be enlarged in a touch manner and the processing module 40 reduces the specific region 11 on the display unit 10 accordingly so that the content displayed in the reduced specific region 11 is the same as the content displayed on the touch-sensitive display unit 20 after adjustment, as illustrated in FIG. 3B.

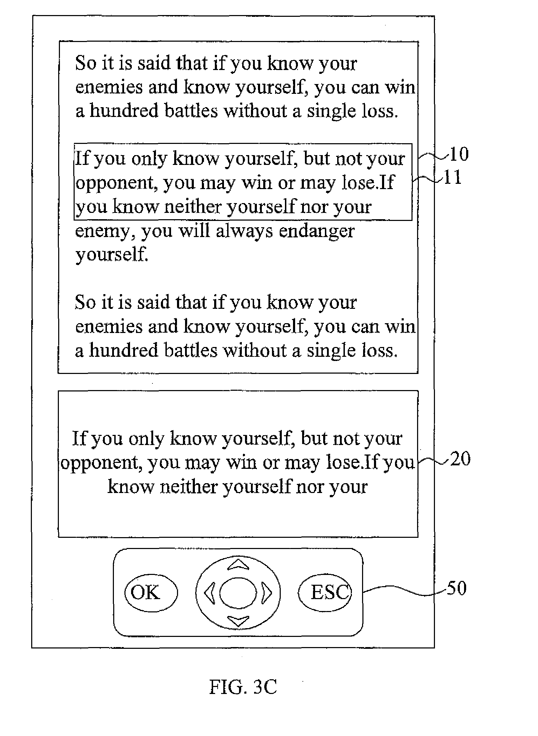

If the user desires to view more content on the touch-sensitive display unit 20, characters, letters, or patterns in the content displayed on the touch-sensitive display unit 20 can also be reduced in the same touch manner and the processing module 40 enlarges the specific region 11 on the display unit 10 accordingly so that the content displayed in the enlarged specific region is the same as the content displayed on the touch-sensitive display unit 20 after adjustment, as illustrated in FIG. 3C.

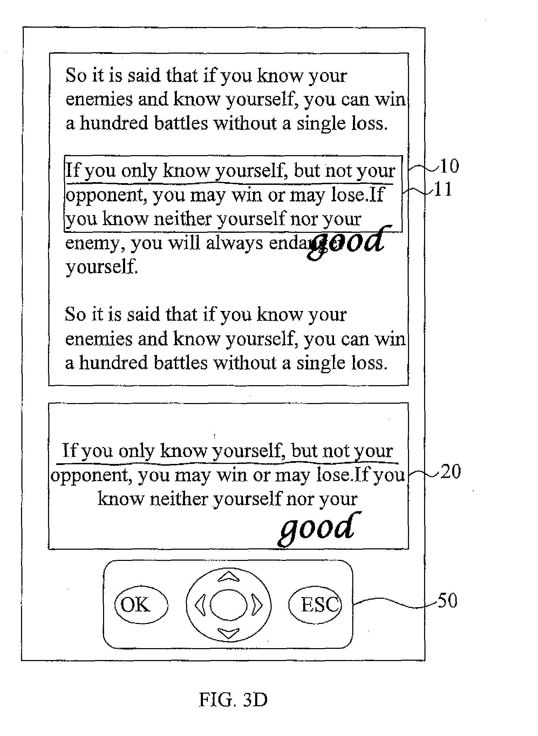

The processing module 40 can further provide a handwriting mode to the display unit 10 or the touch-sensitive display unit 20, such that the user can use the region choosing module 50 or click by touch. After the user clicks on the handwriting mode, he/she can write an annotation on the touch-sensitive display unit 20 directly in a handwriting manner. The processing module 40 generates a first annotated drawing file according to the written annotation and transparently superimposes the first annotated drawing file over the contents displayed on the display unit 10 and the touch-sensitive display unit 20 according to the written annotation and a first relative position of the content displayed on the touch-sensitive display unit 20, as illustrated in FIG. 3D. Herein, the so-called "transparently superimposing" refers to that the background of the first annotated drawing file has a transparency and the first annotated drawing file is displayed over the original displayed content to a display result as illustrated in FIG. 3D. In FIG. 3D, the user writes "good" and draws a line on the touch-sensitive display unit 20. Thus, the processing module 40 saves the "good" and the line segment as a first annotated drawing file and transparently superimposes the first annotated drawing file over the content displayed on the display unit 10 according to the written annotation and the relative position of the displayed content.

In the first annotated drawing file, since there are usually not many written annotations, the processing module generates a second annotated drawing file from parts of the first annotated drawing file where the annotations are written. The volume of the second annotated drawing file is less than that of the first annotated drawing file. The second annotated drawing file and the relative position of the displayed content will be stored in the storage unit 30. In this embodiment, the second annotated drawing file includes a rectangular specific region that contains the "good" and the line segment, but the present invention is not limited thereto.

When the digital file is closed, and opened again, the processing module 40 can read the second annotated drawing file and the relative position. The user can freely determine whether or not to display the second annotated drawing file on the display unit 10. This provides increased convenience to the user.

Moreover, the processing module 40 is preferably a microprocessor or a controller. The above-mentioned functions may be performed by hardware or may be performed in such a manner that programmable chips are configured to execute specific programs of software. The second annotated drawing file in this embodiment only can be read or written by the related software or hardware of the processing module 40 in this embodiment. When the second annotated drawing file is read by other electronic apparatus, the software or hardware used is not the same so that the second annotated drawing file cannot be read. This would not cause trouble to other users.

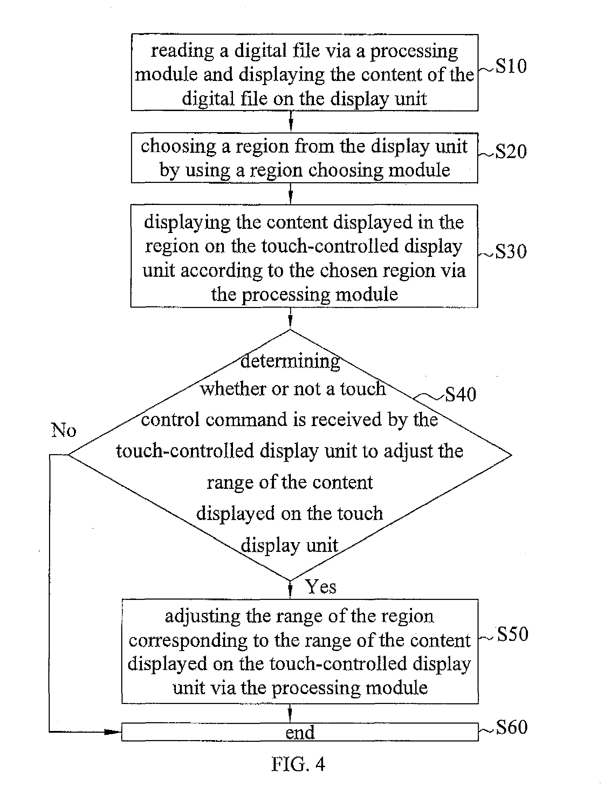

Referring to FIG. 4, there is illustrated a flow chart illustrating the implementation of an image display method according to the present invention. In this figure, the implementation procedure is applicable to the multi-screens electronic apparatus as illustrated in FIG. 1. The image display method comprises the following steps:

Step S 10, reading a digital file via a processing module and displaying the content of the digital file on the display unit.

Step S20, choosing a specific region from the display unit by using a region choosing module.

Step S30, displaying the content displayed in the specific region on the touch-sensitive display unit according to the chosen specific region via the processing module.

Step S40, determining whether or not a touch control command is received by the touch-sensitive display unit to adjust the range of the content displayed on the touch-sensitive display unit, if yes, performing step S50, if no, performing step S60.

Step S50, adjusting the range of the specific region in the display unit according to the adjusted range of the content displayed on the touch-sensitive display unit via the processing module

Step S60, the end.

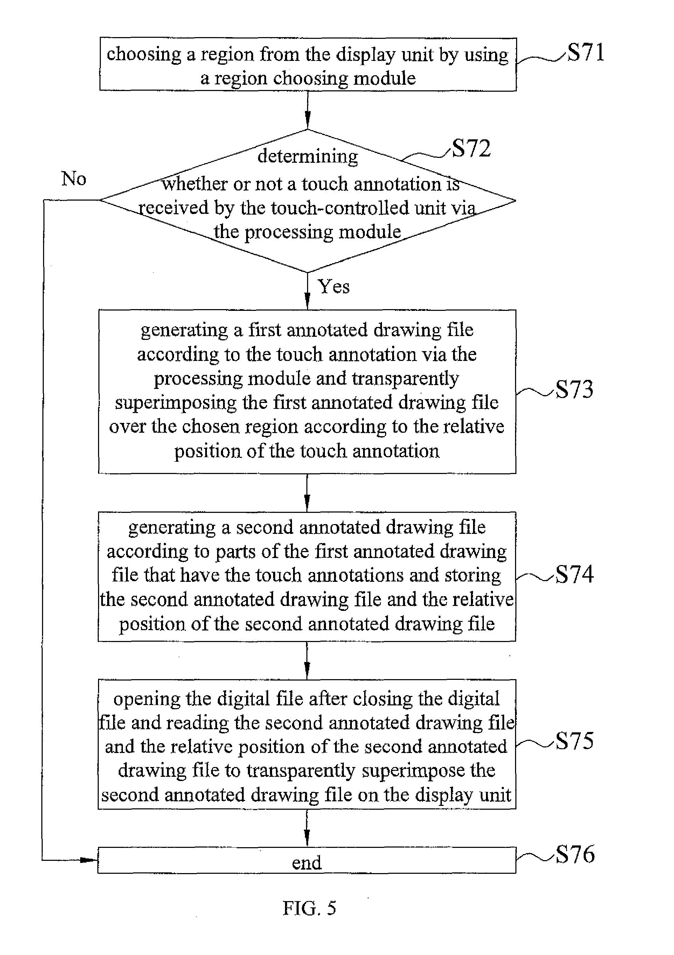

The image display method of the present invention further comprises an image display method for handwriting input, as illustrated in FIG. 5. In FIG. 5, the image display method for handwriting input comprises the following steps:

Step S71, choosing a specific region from the display unit by using a region choosing module and displaying the content in the specific region on the touch-sensitive display unit via the processing module.

Step S72, determining whether or not a touch annotation is received by the touch-sensitive display unit via the processing module, if yes, performing step S73, if no, performing step S76.

Step S73, generating a first annotated drawing file according to the touch annotation via the processing module and transparently superimposing the first annotated drawing file over the chosen specific region in step S30 according to the relative position of the touch annotation.

Step S74, generating a second annotated drawing file according to parts of the first annotated drawing file that have the touch annotations and storing the second annotated drawing file and the relative position of the second annotated drawing file.

Step S75, opening the digital file after closing the digital file and displaying the content of the digital file on the display unit and/or the touch-sensitive display unit, and reading the second annotated drawing file and the relative position of the second annotated drawing file to transparently superimpose the second annotated drawing file over the content displayed on the display unit and/or the touch-sensitive display unit.

Step S76, the end.
The above description is illustrative only and is not to be considered limiting. Various modifications or changes can be made without departing from the spirit and scope of the invention. All such equivalent modifications and changes shall be included within the scope of the appended claims.

## Claims

1. An image display method applicable to an electronic apparatus with a display unit (10) and a touch-sensitive display unit (10), the image display method comprising:
reading a digital file via a processing module (40) and displaying the content of the digital file on the display unit (10);
displaying the content of a specific region (11) in the display unit (10) on the touch-sensitive display unit (10) via the processing module (40);
adjusting, by the processing module (40), the range of the content displayed on the touch-sensitive display unit (10) according to a touch control command inputted to the touch-sensitive display unit (10); and
adjusting the range of the specific region (11) in the display unit (10) according to the adjusted range of the content displayed on the touch-sensitive display unit (10) via the processing module (40).

2. The image display method as recited in claim 1, wherein the touch control command is dragging the range of the content displayed on the touch-sensitive display unit (20) and the processing module (40) enables the displacement of the specific region (11) according to the touch control command so that the content displayed in the displaced specific region (11) corresponds to the content displayed on the touch-sensitive display unit (20) after dragging.

3. The image display method as recited in claim 1 or 2, wherein the touch control command is enlarging or reducing the range of the content displayed on the touch-sensitive display unit (20) and the processing module (40) enlarges or reduces the specific region (11) according to the touch control command so that the content displayed in the enlarged or reduced specific region (11) corresponds to the content displayed on the touch-sensitive display unit (20) after enlargement or reduction.

4. The image display method as recited in one of claims 1 to 3, further comprising the following steps:
inputting a touch annotation to the touch-sensitive display unit (20) so that the processing module (40) generates a first annotated drawing file according to the touch annotation;
transparently superimposing the first annotated drawing file over the specific region (11) according to the touch annotation and a first relative position of the content displayed on the touch-sensitive display unit (20) by using the processing module (40); and
generating a second annotated drawing file according to parts of the first annotated drawing file that have the touch annotations via the processing module (40) and storing the second annotated drawing file and a second relative position of the content displayed on the display unit (10) in a storage unit (30).

5. The image display method as recited in claim 4, further comprising the following steps:
opening the digital file after closing the digital file and displaying the content of the digital file on the display unit (10); and
reading the second annotated drawing file and the second relative position via the processing module (40) and transparently superimposing the second annotated drawing file over the second relative position on the display unit (10).

6. The image display method as recited in one of claims 1 to 5, wherein the frame per second (FPS) of the display unit (10) is less than the frame per second of the touch-sensitive display unit (20), and the resolution of the display unit (10) is higher than the resolution of the touch-sensitive display unit (20).

7. The image display method as recited in claim 6, wherein the frame per second of the display unit (10) is less than about 5 FPS, and the frame per second of the touch-sensitive display unit (20) is between about 5 FPS and 30 FPS.

8. The image display method as recited in one of claims 1 to 7, further comprising providing a region choosing module (50) to choose the specific region (11) from the display unit (10).

9. A multi-screens electronic apparatus comprising:
a display unit (10);
a touch-sensitive display unit (20);
a storage unit (30) for storing a digital file;
a processing module (40) electrically connected to the display unit (10), the touch-sensitive display unit (20) and the storage unit (30) for reading a digital file to display the content of the digital file on the display unit (10); and
a region choosing module (50) electrically connected to the processing module (40) for choosing a specific region (11) from the display unit (10), so that the processing module (40) displays the content of the specific region (11) on the touch-sensitive display unit (20);
wherein when a touch control command is received by the touch-sensitive display unit (20), so that the processing module (40) adjusts the range of content displayed on the touch-sensitive display unit (20), the processing module (40) adjusts the range of the specific region (11) according to the adjusted range of the content displayed on the touch-sensitive display unit (20).

10. The multi-screens electronic apparatus as recited in claim 9, wherein the touch control command is dragging the range of the content displayed on the touch-sensitive display unit (20) and the processing module (40) enables the displacement of the specific region (11) according to the touch control command so that the content displayed in the displaced specific region (11) corresponds to the content displayed on the touch-sensitive display unit (20) after dragging.

11. The multi-screens electronic apparatus as recited in claim 9 or 10, wherein the touch control command is enlarging or reducing the range of the content displayed on the touch-sensitive display unit (20) and the processing module (40) enlarges or reduces the specific region (11) according to the touch control command so that the content displayed in the enlarged or reduced specific region (11) corresponds to the content displayed on the touch-sensitive display unit (20) after enlargement or reduction.

12. The multi-screens electronic apparatus as recited in one of claims 9 to 11, wherein a touch annotation is received by the touch-sensitive display unit (20), the processing module (40) generates a first annotated drawing file according to the touch annotation, and the processing module (40) transparently superimposes the first annotated drawing file over the specif region (11) according to the touch annotation and the first relative position of the content displayed on the touch-sensitive display unit (20).

13. The multi-screens electronic apparatus as recited in claim 12, wherein the processing module (40) generates a second annotated drawing file according to parts of the first annotated drawing file that have the touch annotations and stores the second annotated drawing file and a second relative position of the content displayed on the display unit (10) in the storage unit (30).

14. The multi-screens electronic apparatus as recited in claim 13, wherein the digital file is opened again after being closed, the processing module (40) displays the content of the digital file on the display unit (10) and reads the second annotated drawing file and the second relative position to transparently superimpose the second annotated drawing file over the second relative position on the display unit (10).

15. The multi-screens electronic apparatus as recited in one of claims 9 to 14, wherein the frame per second of the display unit (10) is less than the frame per second of the touch-sensitive display unit (20), and the resolution of the display unit (10) is higher than the resolution of the touch-sensitive display unit (20).

16. The multi-screens electronic apparatus as recited in claim 15, wherein the frame per second of the display unit (10) is less than about 5 FPS, and the frame per second of the touch-sensitive display unit (20) is between about 5 FPS and 30 FPS.
